# EUROPEAN PATENT SPECIFICATION

(11) **EP 2 317 517 B1**
(45) Date of publication and mention of the grant of the patent: **07.05.2014**
(21) Application number: 10186994.9
(22) Date of filing: 08.10.2010
(51) Int. Cl.: G11B 27/32, G11B 27/28, G11B 27/11, G06F 17/30

(54) **Metadata record generation**
Metadaten-Aufzeichnungserzeugung
Génération de registres de métadonnées

(30) Priority: 09.10.2009 US 250227 P
(43) Date of publication of application: 04.05.2011
(60) Divisional application: 14162490.8
(73) Proprietor: Adelphoi Limited, London WC2H 9TZ (GB)
(72) Inventor: Hodgkinson, Charles, London, WC2H 9TZ (GB); Zavieh, Kirk, London, WC2H 9TZ (GB)
(74) Representative: Harris, Ian Richard

(56) References cited:
- WO-A1-2008/143768
- US-A1- 2001 041 050
- US-A1- 2005 038 819
- US-A1- 2009 202 220

## Description

### Technical Field

The invention relates to methods and apparatus for the automatic identification and selection of metadata from media craft tools.

### Background

The term "craft tool" as used herein is a computer-implemented tool for audio and/or visual editing. A craft tool can be used for broadcast purposes. Examples craft tools include, for example, editing software used to edit audio and/or visual productions (project), e.g. film editing, programme editing. Other examples of craft tools include so-called sequencers that are normally used for audio-only productions. Other examples of craft tools include tools for broadcast automation that enable audio and video cues to be cued-up and played according to a schedule or when triggered from a control panel.

The term "project" as used herein refers to an audio or audio-visual production, for example a particular cut of a film, or an episode of a TV programme, or a mix of a song or a production going to air. A project file within a craft tool is a central file in which all the information about a particular audio or audio-visual production is stored and points at the media files that are used in the project.

The term "sequence" as used herein, and as typically used in craft tool terminology, refers a particular edit within a project. For example, if the project is a given film, then examples of sequences (edits) might be a pre-watershed version, the trailer version, the director's cut etc.

The term "metadata" as used herein refers to any information of whatever form relating to a project or a sequence for a project. Examples of metadata include: a project name; a creator name; names of media files used in the project,; technical information about the media files used in a project such as bit depth, sample rate, global positioning system (GPS) location, exposure, etc.; timing data about where and how each media file is cut and edited into the programme; process data: settings information about how sections of audio or video have been processed (e.g. visual effects); free text or customized fields that an editor types in or imports into a project; map and/or GPS data; audio levels data; graphics data; colour data; rights data.

The term "content" is herein to refer to media held in a media file. A media file can contain content in the form of raw audio, video footage, image, graphics, etc. The content in the media files are loaded into the craft tool by an editor operating the craft tool in order to create a project.

An editor may have used music tracks in his production. The editor normally has a compliance obligation to make a list of all the music used, with the times in and out, and a list of all other associated fields which show the identities and ownership stakes of the interested parties in each piece of music; composer, publisher, arrange etc. Such a list of music with all the associated metadata is commonly known as a cue sheet. It is a significant overhead for an editor to identify the piece of music used, then to find out and attach the metadata for that music, and then to organise the meta data into a cue sheet format.

Most craft tools can export a standard edit decision list (EDL file) which can then be automatically interrogated to find the filename of each music file used and the timing of when it was used in the production. Automated "EDL-to-cue sheet" software is available that uses filenames to lookup against a database of music titles and their associated metadata, thereby avoiding the need for the editor to have to find that information. WO 2006/028600 describes an automated method of generating a cue sheet from an EDL by parsing EDL data.

However, an approach using such automated EDL-to-cue sheet software relies on the file name of the music track as used by the editor in the project being exactly the same as the file name in the look-up database. This is a problem since the editor may use an abbreviation, or may not be aware of the name that is in a database. For example, the editor might refer to a Madonna track as Madi1, whereas the database of metadata could use a totally different name.

Also, before an editor can create an EDL file from a project, the editor has to carry out a lot of time-intensive and error-prone organisation in the craft tool so that the EDL includes all the information that is relevant to a cue sheet. (e.g., voiceover and other musical tracks must be weeded out and audio tracks must be arranged in a particular way for the EDL export functions to work)

US 2005/038819 discloses a music recommendation system that receives a user selection of desired music, retrieves analysis data associated with the selected music, and generates a playlist of songs based on the analysis data. The analysis data is generated based on a processing of one or more audio signals associated with the selected music. The analysis data may be downloaded from a central server. If the analysis data is not available from the central server, it is generated locally at a user end, and uploaded to the central server. A plurality of user-selectable shuffling mechanisms are provided to allow the order of the songs to be shuffled according to the selected shuffling mechanism.

US2001/041050 discloses a video data storing unit that stores video data pieces. An editing information generating unit generates editing information sets. A copyright information storing unit stores a standard copyright royalty fee for each video data piece. A royalty fee calculation unit calculates a total copyright royalty fee using the editing information sets and the standard copyright royalty fees. An upper limit judging unit judges whether the total copyright royalty fee exceeds an upper limit. If the total copyright royalty fee exceeds the upper limit, a reediting unit deletes part of a clip to reduce the total copyright royalty fee to a level no more than the upper limit.

### Summary

The invention is defined in the claims.

In an aspect defined in Claim 1, there is provided a computer-implemented method of generating a metadata record representative of media content from at least one sequence of at least one project from at least one craft tool, the craft tool being a computer-implemented tool for audio and/or visual editing and defining a project by media content of a project sequence stored in a plurality of media items and metadata relating to the project sequence. The method comprises steps, carried out by a first computer system, of extracting media content from media items of the project sequence, processing the media content extracted from a media item to generate a representation of the media content extracted from the media item, extracting metadata from the media item, and producing an output including the extracted metadata and the representation of the extracted media content, and the method further comprises steps, carried out by the first computer system, or a second computer system, of performing pattern recognition using the representation of the extracted media content for a said media item and a reference database containing reference data items including reference content representations, a said reference content representation including a fingerprint of reference content and associated reference metadata, to match the representation of the extracted media content for said media item to a reference content representation for a reference data item to determine reference metadata for identifying the extracted media content for said media item, and generating a file for a metadata record, wherein the metadata record forms a cue sheet, the cue sheet comprising the extracted metadata for said media item where no match is found in the database for the representation of the extracted media content for said media item and comprising the determined reference metadata where a match is found in the database for the representation of the extracted media content for said media item..

Another aspect provides a computer program product comprising program code operable to carry out the steps of such a method. The computer program product can include at least one computer readable medium, the computer readable medium carrying the program code.

In a further aspect defined in Claim 13, there is provided a system comprising at least one computer system for carrying out such a method.

### Brief Description of the Drawings

Embodiments of the invention are described hereinafter, by way of example only, with reference to the accompanying drawings.
Figure 1 is a schematic overview of a system in which an embodiment of the invention can be implemented.
Figure 2A is a schematic block diagram of a client system;
Figure 2B is a schematic block diagram representing functional components of the client system.
Figure 3 is a schematic representation of a graphical interface of a craft tool.
Figure 4 is a schematic block diagram representing functional components of a data extraction module.
Figure 5 is a flow diagram illustrating an example operation flow for the data extraction module.
Figure 6A is a schematic block diagram of a host system;
Figure 6B is a schematic block diagram representing functional components of the host system.
Figure 7 is a flow diagram illustrating an example operation flow for the host system.

### Detailed Description

An embodiment of the invention enables the automatic selection and extraction of metadata and media content from projects in a craft tool. An embodiment of the invention can provide for the automated extraction of such data for purposes of identification, classification and management of such metadata and content using automated identification techniques including, for example, pattern recognition of content, for example audio and visual content. An embodiment of the invention can facilitate the automatic tracking and centralised storage of metadata and content for compliance and other purposes, and can enable querying of organised metadata stored in a central database. An embodiment of the invention enables metadata and media content to be extracted automatically from a project in a craft tool at a client system and to be forwarded to a host system for processing, including, for example, the creation of a cue sheet including timings for media files from timing metadata in a project file to create the timings on the cue sheet.

The term "data extraction module" as used herein refers to an application that is provided for a craft tool. Different versions of the data extraction module can be configured to access the metadata and the content in a project created by an editor within a given craft tool. Each individual data extraction module version provides the same set of functionalities, although the respective versions are adapted to the structure of the metadata and content for each craft tool and the platform on which the craft tool is implemented, for example OS X, Windows, Linux etc.

The data extraction module can be configured as a standalone application (i.e. to be run as stand alone program) or may be more configured as a plug-in integrated into the menu structure of a craft tool such that is can be triggered from within a menu in the craft tool.

An example embodiment of a system incorporating the data extraction module can employ pattern recognition to determine metadata for content from a project.

An embodiment of the invention does not depend solely on filenames and other metadata in a project in a craft tool but it is also operable automatically to analyse content in the project in order automatically to generate and/or to verify metadata. In an example embodiment pattern recognition is used to analyse the content. In one example embodiment, for instance, pattern recognition is used to enable automatic cue sheet generation as follows:

A data extraction module is operable to identify content, for example audio content, in respective media files of a project and to generate a fingerprint of content of each media file. The data extraction module generates an export file that contains the fingerprints and metadata extracted from the project. The export file is then delivered to a host server. The host server is operable to compare fingerprint(s) in the export file to reference fingerprints held in a database of source tracks and associated metadata using conventional and/or proprietary pattern recognition techniques to identify metadata corresponding to the extracted content from the project. The metadata identified by comparing the fingerprints can be compared to the metadata extracted from the project to verify the metadata extracted from the project and can be added to the metadata extracted from the project to form a cue sheet that can be imported into a cue sheet view for reporting to performing rights societies.

The present approach differs from conventional audio recognition systems than listen to a soundtrack of a completed programme (typically when it is broadcast) in which the audio recognition for music reporting is adapted to recognise music with layers of voiceover and special effects etc. on top of it. Limitations in the conventional techniques caused by the need to take account of such additional "noise" impacts on the efficiency and accuracy of such audio recognition systems, and can prevent such systems being used to accurately identify timings of music excerpts with voiceovers, fades, etc. In contradistinction thereto, as an embodiment of the invention acts on individual content media files in individual tracks within a project, audio recognition can be made more efficient and accurate. Also combining audio recognition with metadata from the project relating to timings of the media content files within the tracks of the project enables more accurate determination of timings within the project. The advantages provided by an embodiment of the invention apply to all types of media, not just audio.

An example embodiment is described in more detail, by way of example only, with reference to the drawings.

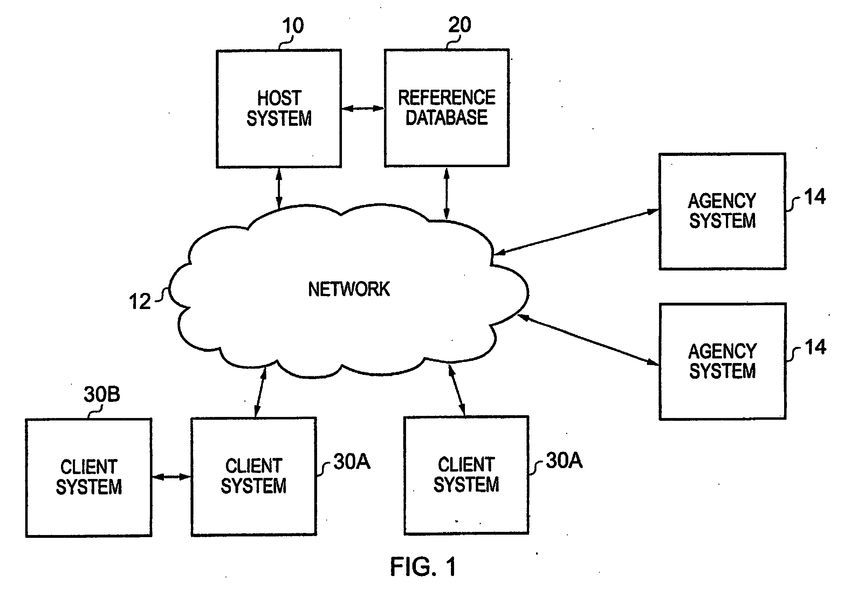

Figure 1 is schematic representation of an overview of a system.

The system shown in Figure 1 includes a host system 10 connected to a network 12, for example the Internet. The host system can be implemented by one or more computer server systems. The host system 10 is configured to access a reference database 20. The reference database 20 can be integral to or separate from the host system 10. Where the reference database 20 is separate from the host system 10, the reference data base can be implemented by a computer database system and the host system 10 can be configured to access the reference database 20 directly, or via the network 12. Figure 1 shows a plurality of client systems 30A and 30B. A client system can be implemented by one or more computer systems. The client systems 30A are connected to the network 12, and the client system 30B is a stand-alone system. A client system 30 includes a craft tool and a data extraction module that is operable to identify content in respective media files of a project, to generate a fingerprint of the content of each media file and to create a file to export to the host system 10. Figure 1 also shows a plurality of agency systems 14 that are connected to network 12. An agency system 14 can be implemented by one or more computer servers and can be operated by an organisation such as a performing right society. The host system 10 is operable to receive and process files exported from the client systems 30. The processing includes comparing fingerprint(s) in the exported file to reference fingerprints held in a database of source tracks and associated metadata to identify metadata corresponding to the extracted content from the project and generating cue sheets for submission to one or more of the agency systems 14.

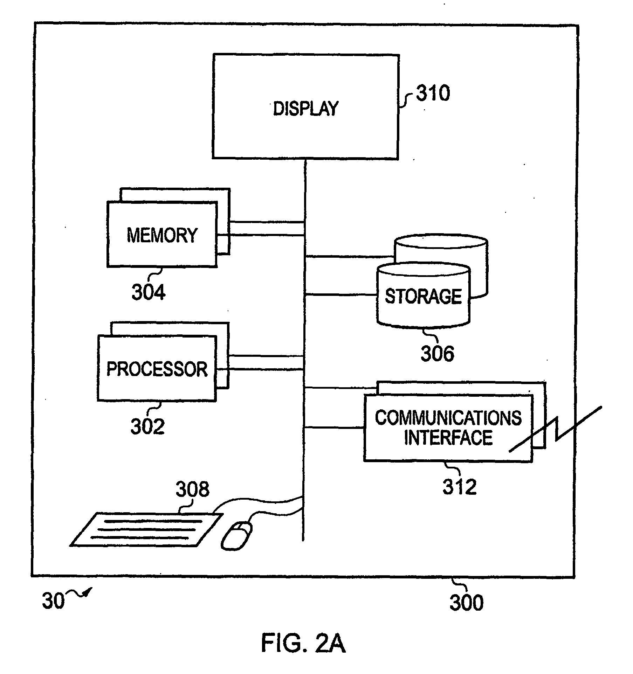

Figure 2A is a schematic block diagram of an example configuration of a client system 30. The client system can be implemented using one or more computer systems 300, each of which can include conventional computer components including, for example, one or more processors 302, memory 304 and storage 306, one or more user input devices 308, one or more displays 310, one or more communications interfaces 312, etc.

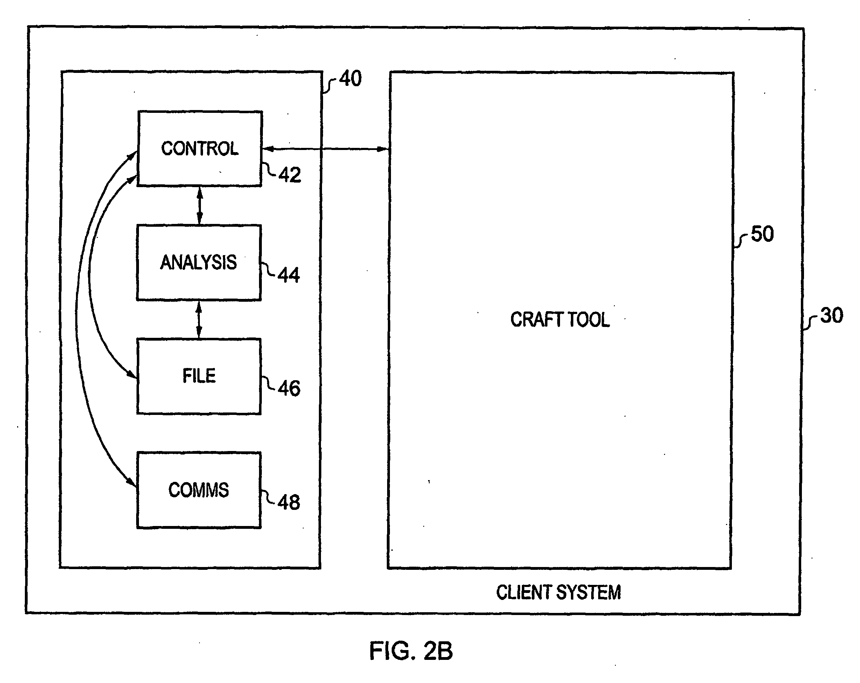

Figure 2B is a schematic representation of functional components of the client system 30. As shown in Figure 2B, the client system 30 includes a craft tool 50. As mentioned earlier, the craft tool 50 can be implemented as a computer-implemented tool for audio and/or visual editing and/or broadcast purposes. The craft tool 50 can include computer program code to be held in the memory 304 and/or storage 306 in the client system 30. The computer program code of the craft tool 50 can be operable when executed on the one or more processors 302 to carry out tasks defined by the craft tool program code. The term craft tool can comprise editing software for editing audio and/or visual productions (projects).

The client system 30 also includes a data extraction module 40. The data extraction module 40 can be implemented as a computer software product, for example as an application separate from the craft tool or as a plug-in for the craft tool 50. The data extraction module 40 can include computer program code to be held in the memory 304 and/or storage 306 in the client system 30. The computer program code of the data extraction module 40 can be operable when executed on the one or more processors 302 to carry out tasks defined by the data extraction program code. The data extraction module 40 is configured to interact with the craft tool 50 for accessing metadata and content held in files in a project defined by the craft tool 50, taking into account the structure of the metadata and content for the craft tool and the platform on which the craft tool is implemented, for example OS X, Windows, Linux etc.

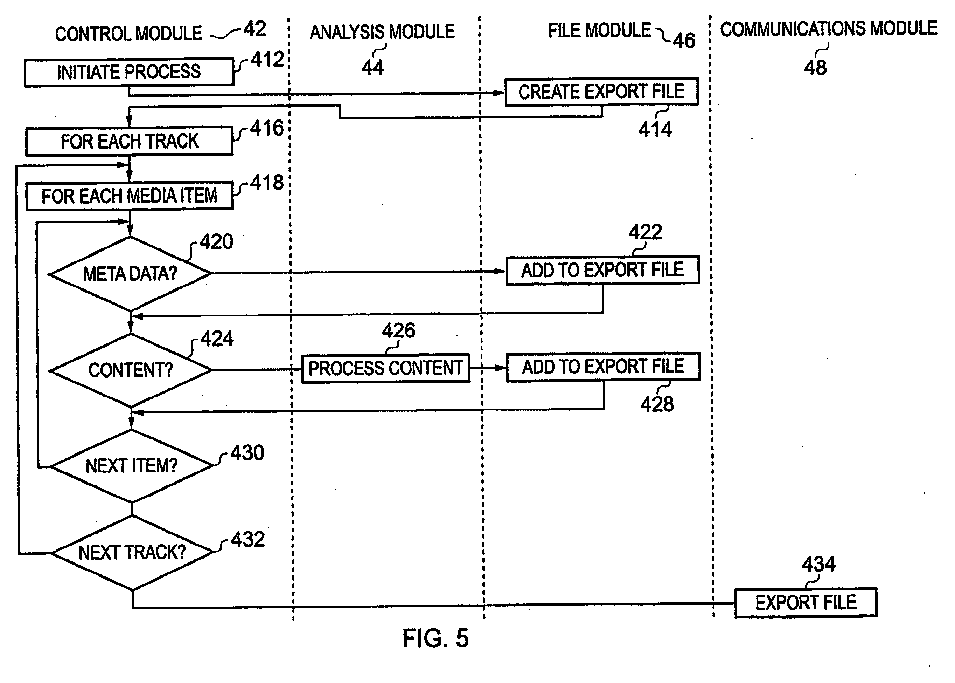

The data extraction module 40 provides a plurality of different functions represented schematically by a control module 42, an analysis module 44, a file module 46 and a communication module 48. The control module 42 is operable to control the operation of the data extraction module 40 and to access metadata and content from the craft tool 50. In various embodiments the data extraction module 40 can be operable to access the metadata and content from the craft tool 50 either directly, or via one or more layers of abstraction, for example via an API provided by the craft tool 50. The control module 42, analysis module 44, file module 46 and communication module 48 can be implemented as computer software (computer program code) held in memory or storage in the client system that is operable to control the processor(s) 300 of the client system to carry out the process described with reference to Figure 5.

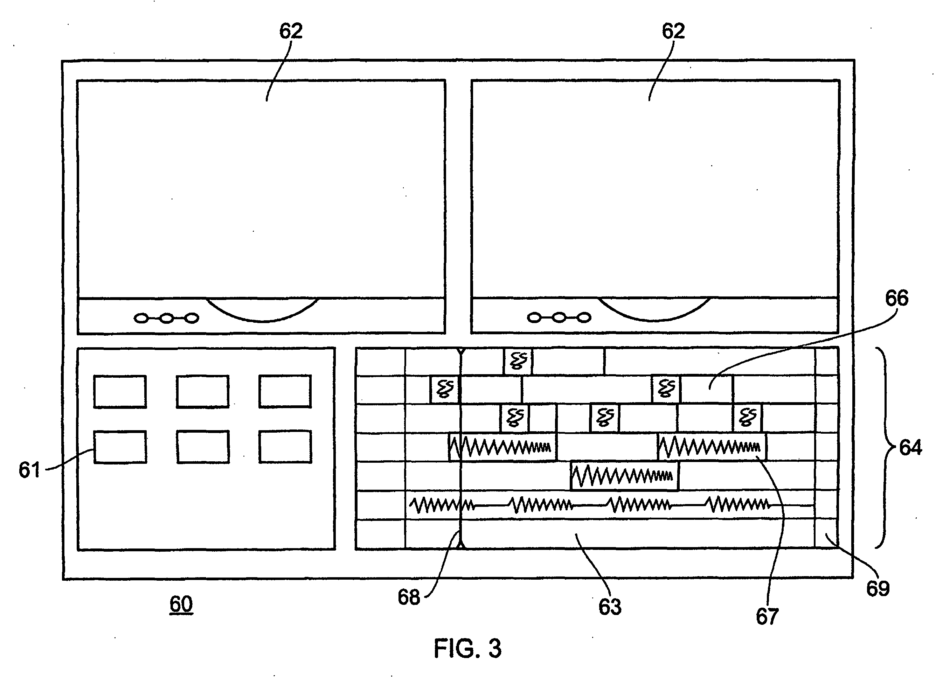

Figure 3 is a schematic representation of an example of a graphical display interface 60 that the computer program code of an example craft tool 50 can cause the one or more processors 302 to display on a display 310 of the client system 30. The graphical display interface 60 can be used by an editor as a control interface for controlling the craft tool 50. As shown in the upper part of Figure 3, first and second panes 62 are used for displaying video information during editing. A control pane 61 is used to select projects on which the editor is to work and a project pane 63 display details of a project. The details of a project are represented as a set of media items in the form of tracks 64 containing content, for example video content 66 and audio content 67. The media items can be stored as files, or records, in the memory 304 and/or storage 306 of the client system 30. The project pane 63 displays the timing of the content with respect to a timeline and a particular point in time can be identified by a timing cursor 68. Various controls are available to the editor (e.g., via control buttons 69) for entering and viewing metadata relating to the content displayed on the project pane 63.

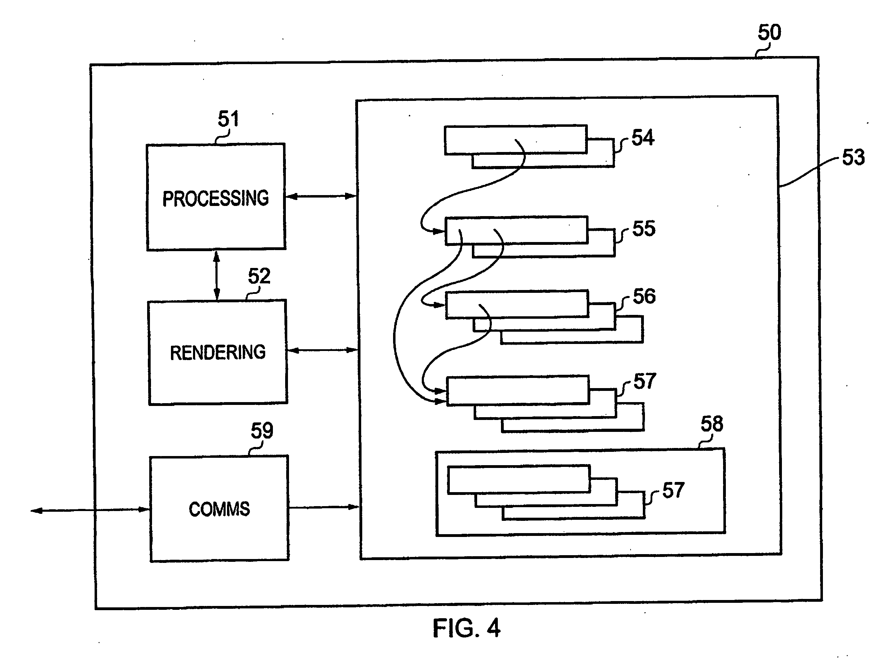

Figure 4 is a schematic block diagram of functional components of an example of a craft tool 50. The craft tool comprises a processing module 51 that includes computer program code that defines a file structure 53 to be stored in the memory 304 and/or storage 306 of the client system. A rendering module 52 includes computer program code that is operable to generate the graphical representation illustrated in Figure 3 based on the file structure 53. As illustrated in Figure 4, the file structure comprises one or more project items defining one or more projects. Each project item 54 identifies the content of the project. In the example shown, a project item 54 identifies, or points to, one of more sequence items 55 relating to each project 54. In the example shown, each sequence item 55 identifies a plurality of tracks 56 with which media items are associated. In the example shown, each sequence item 55 identifies one or more media items 57 associated with the sequence and with the respective tracks 56. The media content of each media item 57 can be one of a video, image, text, audio media item. Each media item 57 can be associated with one or more timings within one or more of the tracks 56. In the present example, the timing metadata is held in the sequence items 55 along with pointers to the content items 57. Figure 4 also illustrates a media bin 58 that contains media content item 57, for example media content items that have been discarded by the editor. It is to be noted that the file structure shown in Figure 4 is a schematic representation only, and that different craft tools implement a file structure in different ways.

The file structure 53 can be implemented using respective files for the items identified, using an object-based structure, using a mark-up language such as XML, or in any other suitable manner. Indeed, different craft tools implement a file structure in different ways.

The craft tool 50 can also include a communications module 59 that is configured to provide an interface for accessing the file structure 53. The communications module 59 can be in the form of computer program code defining an application programming interface (API).

As indicated, the processing module 51, rendering module 52 and the communications module 58 can be implemented as computer software held in the memory 304 and/or storage 306 in the client system, the computer software being operable to control the processor(s) of the client system. The file structure 53 can be held in the memory 304 and/or storage 306 in the client system.

Figure 5 is a flow diagram illustrating an example operation 410 of the data extraction module 40.

The data extraction module 40 can be initiated in step 412 by an editor. If the data extraction module is configured as a plug-in for the craft tool 50, the data extraction module 40 can be initiated using a menu item in the craft tool 50. Alternatively, if it is implemented as a separate application, then the application can be initiated. The data extraction module 40 could alternatively be initiated automatically, for example by reaching a given stage in operation of the craft tool. After initiation, the operation of the data extraction module proceeds in an automatic manner.

In step 414, the file module 46 creates a project file for the project sequence.

The control module 42 then processes the media items 57. In the present example, as illustrated in Figure 5, the control module 42 loops 416 for each track 56 and, within each track, extracts 418 each media item 57.

If the control module 42 identifies 420 that the data item 57 contains metadata, then the file module 46 adds 422 the metadata to the project file created in step 414.

If the control module 42 identifies 424 that the data item 57 contains content, then the analysis module 44 processes 426 the content to produce a representation (e.g., a fingerprint) of the content and the file module 46 adds 428 the processed content to the file created in step 414. In one example, the analysis module 44 can be operable to create a Fourier transform of the content as a representation of the content, and the Fourier transform is then stored as the representation of the content in the export file. In other examples, other forms of processing can be employed, for example the processing can be to directly generate metadata for the media item. Content extracted from the project 54 can also be stored in the project file instead of or in addition to the processed content. If the content is associated with metadata in the project 57, then the metadata can be associated with the content and/or processed content in the project file.

The export file can be created using a markup language, for example XML.

If 430, there are more items for the track, the process loops back to step 420.

Otherwise, if 432 there are more tracks for the project the process loops back to step 418.

Otherwise, at step 434, the communications module 48 exports the project file. The communications module 48 can be operable digitally to encrypt the project file before export. Conventional encryption technologies can be used to encrypt the project file such that confidential information contained therein is held confidential and to counter attempts potentially to corrupt the project file. The project file can be exported to the host system 10 directly if the client system (e.g., a client system 30A) is connected to the network 14. Alternatively, if the client system (e.g., the client system 30B) is not connected to the network 14, then the export file can be transferred (for example using a disk, USB memory, wired or wirelessly connection, or otherwise) to a client system 30A that that is connected to the network, from which it can be transmitted to the host system 10 via the network 14.

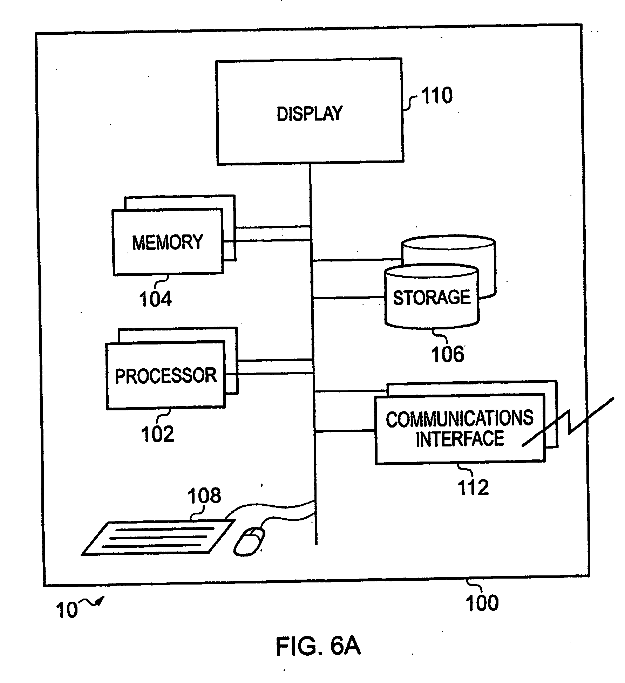

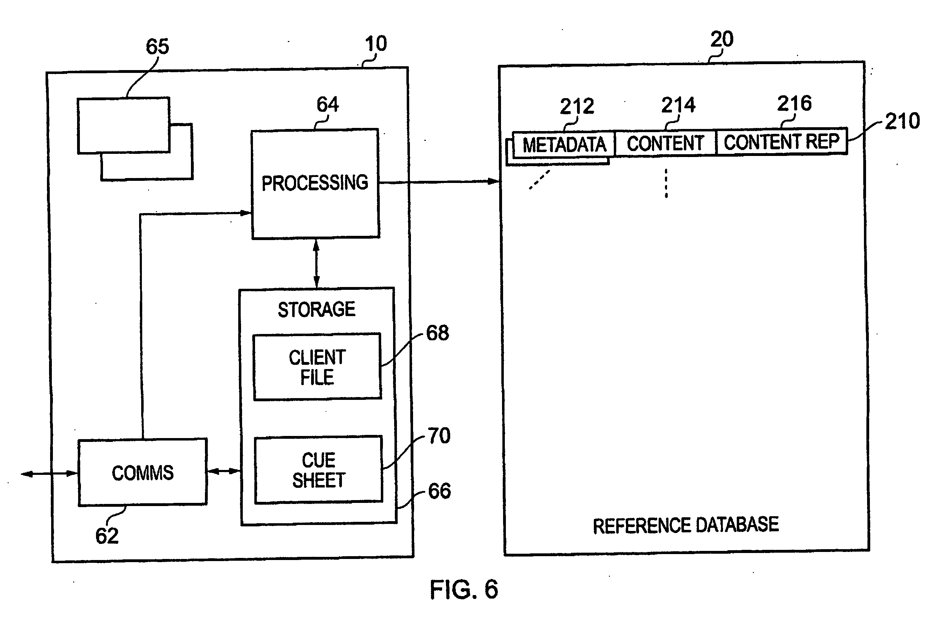

Figure 6A is a schematic block diagram of an example configuration of a host system 10. The host system 10 can be implemented as one or more computer servers 100, each of which can include conventional computer components including, for example, one or more processors 102, memory 104 and storage 106, one or more user input devices 108, one or more displays 110, one or more communications interfaces 112, etc.

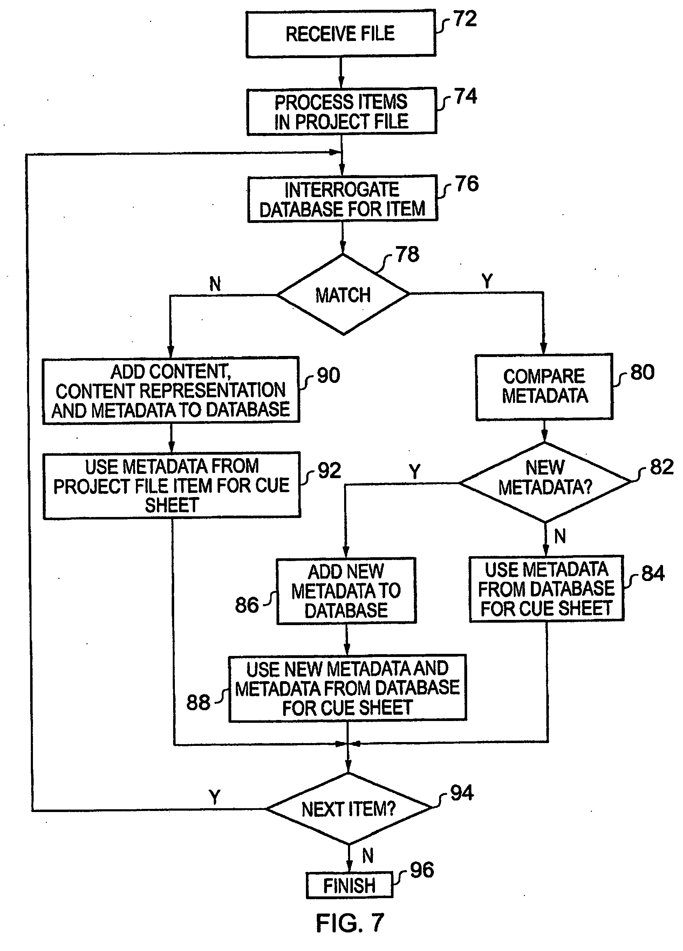

Figure 6B is a schematic representation of functional components of the host system 10. A communications interface 62 provides a connection to the network 14, a processing module 64 provides for processing export files received from client systems 30, and a data structure 66 includes received client export files 68 and generated cue sheets 70. The reference database 20 includes a file structure including items 210 defining content 214 and associated metadata 212 and content representations 216 (e.g., Fourier transforms of content). The processing module 64 can be implemented as computer software that is operable to control the processor(s) 102 of the host system 10 to carry out the process described with reference to Figure 7. The data structure 66 can be held in the memory 104 and/or storage 106 in the host system 10, or in storage accessible to the host system 10. Figure 6 also illustrates different versions of data extraction modules 65 that can be held in storage in memory and/or storage in the host system 10 so that an appropriate data extraction module for a client system 30 can be downloaded to the client system 30 on demand.

Figure 7 is a flow diagram illustrating an example operation of the host system 10.

In step 72 an exported file 68 for a project, or a sequence of a project, (referred to as a project file with reference to Figure 7) is received by the process module 64 from a client system and can be stored in the memory or storage of the host system 10. The process module 64 can be operable to decrypt a project file encrypted at the client system 30.

The process module 64 then loops 74 through the items in the project file 68.

The process module 64 interrogates 78 the database 20 using pattern recognition to determine if a match for the content representation for the item can be found.

If the process module 64 finds 80 a match, then the metadata associated with the matched entry 210 in the database 20 can be compared to any metadata of the item being processed (the current item).

If the process module 64 finds 82 that the current item in the project file does not contain any new metadata, that is metadata not already present in the database 20, then the process module 64 uses 84 the metadata 212 associated with the matched item in the database 20 for creating and/or updating a cue sheet 70 for the project.

If the process module 64 finds 82 metadata for the current item in the project file that is not found in the database 20, then the process module 64 adds the new metadata to the metadata 212, possibly by creating an additional metadata or a history field, associated with the matched item in the database 20. Then, the process module 64 uses the new metadata and any existing metadata 212 for the matched item 210 in the database 20 for creating and/or updating the cue sheet 70 for the project.

If the process module at step 78 did not find a match for the current item of the project file in the database 20, then the process module 64 adds 90 the content representation and the content and any associated metadata from the current item to the database as a new database entry. The process module 64 then uses 92 the metadata from the current item of the project file for creating and/or updating the cue sheet 70 for the project

If, after steps 84, 88 or 92, the process module 64 finds 94 that there are more items in the project file, the process returns to step 76 for the next item. Otherwise, the process completes in step 96 and the cue sheet can be sent to the agency system 14.

In the above process, where reference is made to identifying a match, the match can relate to identifying the whole identity of content, for example the identity of a particular recording, or can be to identifying details within the content. For example pattern recognition could be used to identify the face of an actor in a movie and identify times within a movie that the actor appears. For example, a fingerprint (representation) of the image of an actor could be stored in the reference database along with metadata identifying the actor. Similarly, a fingerprint (representation) of the image of a product could be stored in the reference database along with metadata identifying the product. As another example, a fingerprint (representation) of the voice of a musician could be stored in the reference database along with metadata identifying the musician. Other aspects of facets of a project or project sequence can also be captured by the techniques described above. For example information can be captured automatically that can identify moods (e.g. colours, types of music or sound effects, expressions, etc.) and aspects that could lead to the identification of product placements (e.g. themes, topics of interest etc.). Also text could be identified corresponding to spoken words or images in the content, scores could be generated for music, etc. In this way, an embodiment of the invention can be used to identify details within a content item. Using timing and/or other metadata in the exported file from the client system, the process module 64 of the host system 10 is then able not only to generate cue sheets for, for example, a performing rights society, it can also be used, for example, to quantify royalties etc., opportunities for product placement and the like.

In summary therefore, using an example embodiment of the invention, a user launches a data extraction module application and browses through a data extraction module dialogue to target one or more project files created by a craft tool which holds essential information about the structure of a particular editing project. A project might contain multiple sequences - i.e. different edits of the same film.

Different versions of a data extraction module can be provided as different craft tools have a different file structures for project files: ranging from XML to fiat files, from open to proprietary format, XMP, binary, audio, video etc. Also different craft tools have different organisations for the way in which a project's associated media files and content are held so that respective versions of a data extraction module can target the different structures of metadata and media files for each craft tool.

An example of the data extraction module can be configured to enable a user to select to view, listen to (audition) the media files and metadata and using the workflow of the data extraction module decide which parts of metadata to export and how to export them.

For example, for making a music cue sheet, the user may listen to audio files used in a project, decide which ones contain music, weed out voiceover and special effects tracks which are not musical, and export one or more resulting export files to the host system. For an image example: a user could drill down to a view all still images used in a production and export the image data in one or more export files to the host system. For a GPS example: a user may wish to create a list of the GPS coordinates for all the video shot and used in the production.

In one example embodiment, the data extraction module creates digital fingerprints of audio tracks in a project as described above, and exports to the resulting files which are then exported, then matched and turned into a cue sheet. ln other examples, other automated techniques can be included to recognise faces, images, voices, moods, product placement opportunities, etc.

Also, in the above description, fingerprints (representations) of individual media files as providing in individual tracks are generated. However, in addition fingerprints representative of multiple tracks can be generated and included in the exported files. Indeed, a fingerprint of a complete project can be generated to represent the project, for example in the form to be broadcast. Such a fingerprint of part of or an entire project or programme can then be used to identify instances when the project or programme is broadcast.

An embodiment of the invention enables information to be extracted at a granular and more specific level than possible via the interfaces provided in conventional craft tools.

An embodiment facilitates the translation, organising and modifying of metadata and content to different standards for the purpose of delivering the information and content.

An embodiment of the invention enables automation of an identification process at an editing stage of the project, e.g., using pattern recognition technology on the media files in the edit rather than in a finished edit.

Although particular embodiments and implementations have been described, it is noted that these are provided by way of example on, and that other embodiment and implementations can be envisaged within the scope of the claims.

## Claims

1. A computer-implemented method of generating a metadata record representative of media content from at least one sequence of at least one project from at least one craft tool (50), the craft tool being a computer-implemented tool for audio and/or visual editing and defining a project by media content of a project sequence stored in a plurality of media items and metadata relating to the project sequence,
the method comprising steps, carried out by a first computer system (30), of
extracting media content from media items of the project sequence, processing the media content extracted from a media item to generate
a representation of the media content extracted from the media item,
extracting metadata from the media item, and
producing an output including the extracted metadata and the representation of the extracted media content, and
the method further comprising steps, carried out by the first computer system, or a second computer system (10), of
performing pattern recognition using the representation of the extracted media content for a said media item and a reference database (20) containing reference data items (210) including reference content representations (216), a said reference content representation including a fingerprint of reference content and associated reference metadata (212), to match the representation of the extracted media content for said media item to a reference content representation for a reference data item to determine reference metadata for identifying the extracted media content for said media item, and
generating a file for a metadata record, wherein the metadata record forms a cue sheet, the cue sheet comprising the extracted metadata for said media item where no match is found in the database for the representation of the extracted media content for said media item and comprising the determined reference metadata where a match is found in the database for the representation of the extracted media content for said media item.

2. The method of claim 1, comprising:
performing, by the first computer system, said pattern recognition, and
generating, by the first computer system, the metadata record file.

3. The method of claim 2, comprising
transmitting the file to an agency computer system for rights holders.

4. The method of claim 3, comprising encrypting the file prior to transmission.

5. The method of claim 1, comprising:
transmitting, by the first computer system, the output to the second computer system, and
performing, by the second computer system, said pattern recognition; and
generating, by the second computer system, said cue sheet.

6. The method of claim 5, comprising encrypting, by the first computer system, the output prior to transmission to the second computer system.

7. The method of any one of the preceding claims, wherein
the representation of the extracted media content comprises a Fourier transform of the extracted media content and wherein the processing includes generating a Fourier transform of the extracted media content,
the reference content representations comprises Fourier transforms of respective reference works each associated with metadata identifying the reference works.

8. The method of any one of the preceding claims, wherein the media content comprises at least one of audio, text, image and video.

9. The method of any one of the preceding claims, wherein the representation of the extracted media content includes a representation of one or more of faces, images, voices, moods, product placement opportunities, a plurality of tracks of a project, a complete project.

10. The method of any one of the preceding claims, further comprising, updating the database where a match is not found between the representation of the extracted media content for said media item and the reference content representation for a reference data item in the database.

11. A computer program product comprising program code operable to carry out the steps of the method of any one of the preceding claims.

12. A system comprising at least a first computer system (30) comprising a processor and storage, the first computer system implementing a craft tool (50), the craft tool being a computer-implemented tool for audio and/or visual editing and being operable to define a project using media content of a project sequence stored in a plurality of media items and metadata relating to the project sequence, the first computer system further including at least one data extraction module configured to
extract media content from media items of the project sequence,
process the media content extracted from a media item to generate a representation of the media content extracted from the media item,
extract metadata from the media item, and
produce an output including the extracted metadata and the representation of the extracted media content, wherein
the data extraction module of the first computer system, or a second computer system (10), is configured
to perform pattern recognition using the representation of the extracted media content for a said media item and a reference database (20) containing reference data items (210) including reference content representations (216), a said reference content representation including a fingerprints of reference content and associated reference metadata (212), to match the representation of the extracted media content for said media item to a reference content representation for a reference data item to determine reference metadata for identifying the extracted media content for said media item, and
to generate a file for a metadata record, wherein the metadata record forms a cue sheet, the cue sheet comprising the extracted metadata for said media item where no match is found in the database for the representation of the extracted media content for said media item and comprising the determined reference metadata where a match is found in the database for the representation of the extracted media content for said media item.

13. The system of claim 12, comprising a said second computer system, wherein
the data extraction module of the first computer system is configured to transmit the output to the second computer system, and
the second computer system is configured to perform said pattern recognition and to generate the metadata record file.

14. The system of claim 12 or claim 13, wherein the stored media content comprises at least one of audio, text, image and video.

15. The system of any one of claims 12 to 14, wherein the representation of the extracted media content includes a representation of one or more of faces, images, voices, moods, product placement opportunities, a plurality of tracks of a project, a complete project..

## Patentansprüche

1. Computerimplementiertes Verfahren zum Erzeugen eines Metadatensatzes, der einen Medieninhalt darstellt, aus mindestens einer Sequenz von mindestens einem Projekt von mindestens einem Handwerkswerkzeug (50), wobei das Handwerkswerkzeug ein computerimplementiertes Werkzeug für eine Audiobearbeitung und/oder visuelle Bearbeitung und für eine Definition eines Projektes durch einen Medieninhalt einer Projektsequenz ist, die in mehreren Medienelementen und Metadaten, die sich auf die Projektsequenz beziehen, gespeichert ist,
wobei das Verfahren die folgenden Schritte, die von einem ersten Computersystem (30) ausgeführt werden, umfasst:
Extrahieren des Medieninhalts aus den Medienelementen der Projektsequenz,
Verarbeiten des Medieninhalts, der aus einem Medienelement extrahiert worden ist, um eine Darstellung des Medieninhalts, der aus dem Medienelement extrahiert worden ist, zu erzeugen,
Extrahieren der Metadaten aus dem Medienelement, und
Herstellen einer Ausgabe, die die extrahierten Metadaten und die Darstellung des extrahierten Medieninhalts enthält, und
wobei das Verfahren ferner die folgenden Schritte, die von dem ersten Computersystem oder von einem zweiten Computersystem (10) ausgeführt werden, umfasst:
Durchführen einer Mustererkennung unter Verwendung der Darstellung des extrahierten Medieninhalts für ein Medienelement und unter Verwendung einer Referenzdatenbank (20), die Referenzdatenelemente (210) enthält, die Referenzinhaltsdarstellungen (216) enthalten, wobei die Referenzinhaltsdarstellung einen Fingerabdruck eines Referenzinhalts und der damit verbundenen Referenzmetadaten (212) enthält, um die Darstellung des extrahierten Medieninhalts für das Medienelement mit einer Referenzinhaltsdarstellung für ein Referenzdatenelement abzugleichen, um die Referenzmetadaten zur Identifizierung des extrahierten Medieninhalts für das Medienelement zu bestimmen, und
Erzeugen einer Datei für einen Metadatensatz, wobei der Metadatensatz ein Regieblatt bildet, wobei das Regieblatt die extrahierten Metadaten für das Medienelement umfasst, bei dem in der Datenbank für die Darstellung des extrahierten Medieninhalts für das Medienelement kein Abgleich auf Übereinstimmung gefunden wird, und die bestimmten Referenzmetadaten umfasst, bei denen ein Abgleich auf Übereinstimmung in der Datenbank für die Darstellung des extrahierten Medieninhalts für das Medienelement gefunden wird.

2. Verfahren nach Anspruch 1, das Folgendes umfasst:
Durchführen der Mustererkennung mittels des ersten Computersystems, und
Erzeugen der Metadatensatzdatei mittels des ersten Computersystems.

3. Verfahren nach Anspruch 2, das ein Übertragen der Datei an ein Agenturcomputersystem für Rechtehalter umfasst.

4. Verfahren nach Anspruch 3, das ein Verschlüsseln der Datei vor der Übertragung umfasst.

5. Verfahren nach Anspruch 1, das Folgendes umfasst:
Übertragen der Ausgabe an das zweite Computersystem durch das erste Computersystem, und
Durchführen der Mustererkennung mittels des zweiten Computersystems; und
Erzeugen des Regieblatts mittels des zweiten Computersystems.

6. Verfahren nach Anspruch 5, das ein Verschlüsseln der Ausgabe vor der Übertragung an das zweite Computersystem durch das erste Computersystem umfasst.

7. Verfahren nach einem der vorhergehenden Ansprüche, wobei:
die Darstellung des extrahierten Medieninhalts eine Fouriertransformation des extrahierten Medieninhalts umfasst und wobei die Verarbeitung ein Erzeugen einer Fouriertransformation des extrahierten Medieninhalts enthält,
die Referenzinhaltsdarstellungen Fouriertransformationen der jeweiligen Referenzarbeiten umfassen, die jeweils mit Metadaten, die die Referenzarbeiten identifizieren, verbunden sind.

8. Verfahren nach einem der vorhergehenden Ansprüche, wobei der Medieninhalt einen Audio- und/oder Text- und/oder Bild- und/oder Videoinhalt umfasst.

9. Verfahren nach einem der vorhergehenden Ansprüche, wobei die Darstellung des extrahierten Medieninhalts eine Darstellung von einer oder mehreren Ansichten, von Bildern, Sprache, Stimmungen, Gelegenheiten zur Produktplatzierung, von mehreren Spuren eines Projekts und von einem vollständigen Projekt enthält.

10. Verfahren nach einem der vorhergehenden Ansprüche, das ferner ein Aktualisieren der Datenbank umfasst, bei der ein Abgleich auf Übereinstimmung zwischen der Darstellung des extrahierten Medieninhalts für das Medienelement und der Referenzinhaltsdarstellung für ein Referenzdatenelement in der Datenbank nicht gefunden wird.

11. Computerprogrammprodukt, das einen Programmcode umfasst, der betriebsbereit ist, um die Schritte des Verfahrens nach einem der vorhergehenden Ansprüche auszuführen.

12. System, das mindestens ein erstes Computersystem (30) umfasst, das einen Prozessor und einen Speicher umfasst, wobei das erste Computersystem ein Handwerkswerkzeug (50) implementiert, wobei das Handwerkswerkzeug ein computerimplementiertes Werkzeug für eine Audiobearbeitung und/oder visuelle Bearbeitung ist und betriebsbereit ist, ein Projekt zu definieren unter Verwendung eines Medieninhalts einer Projektsequenz, die in mehreren Medienelementen und Metadaten, die sich auf die Projektsequenz beziehen, gespeichert ist, wobei das erste Computersystem ferner mindestens ein Datenextraktionsmodul enthält, das konfiguriert ist:
Medieninhalt aus den Medienelementen der Projektsequenz zu extrahieren,
den Medieninhalt, der aus einem Medienelement extrahiert worden ist, zu verarbeiten, um eine Darstellung des Medieninhalts, der aus dem Medienelement extrahiert worden ist, zu erzeugen,
Metadaten aus dem Medienelement zu extrahieren, und
eine Ausgabe, die die extrahierten Metadaten und die Darstellung des extrahierten Medieninhalts enthält, herzustellen, wobei
das Datenextraktionsmodul des ersten Computersystems oder eines zweiten Computersystems (10) konfiguriert ist:
eine Mustererkennung unter Verwendung der Darstellung des extrahierten Medieninhalts für ein Medienelement und unter Verwendung einer Referenzdatenbank (20), die Referenzdatenelemente (210) enthält, die Referenzinhaltsdarstellungen (216) enthalten, durchzuführen, wobei die Referenzinhaltsdarstellung einen Fingerabdruck eines Referenzinhalts und der damit verbundenen Referenzmetadaten (212) enthält, um die Darstellung des extrahierten Medieninhalts für das Medienelement mit einer Referenzinhaltsdarstellung für ein Referenzdatenelement abzugleichen, um die Referenzmetadaten zur Identifizierung des extrahierten Medieninhalts für das Medienelement zu bestimmen, und
eine Datei für einen Metadatensatz zu erzeugen, wobei der Metadatensatz ein Regieblatt bildet, wobei das Regieblatt die extrahierten Metadaten für das Medienelement umfasst, bei dem in der Datenbank für die Darstellung des extrahierten Medieninhalts für das Medienelement kein Abgleich auf Übereinstimmung gefunden wird, und die bestimmten Referenzmetadaten umfasst, bei denen ein Abgleich auf Übereinstimmung in der Datenbank für die Darstellung des extrahierten Medieninhalts für das Medienelement gefunden wird.

13. System nach Anspruch 12, das ein zweites Computersystem umfasst, wobei das Datenextraktionsmodul des ersten Computersystems konfiguriert ist, die Ausgabe an das zweite Computersystem zu übertragen, und
wobei das zweite Computersystem konfiguriert ist, die Mustererkennung durchzuführen und die Metadatensatzdatei zu erzeugen.

14. System nach Anspruch 12 oder 13, wobei der gespeicherte Medieninhalt einen Audio- und/oder Text- und/oder Bild- und/oder Videoinhalt umfasst.

15. System nach einem der Ansprüche 12 bis 14, wobei die Darstellung des extrahierten Medieninhalts eine Darstellung von einer oder mehreren Ansichten, von Bildern, Sprache, Stimmungen, Gelegenheiten zur Produktplatzierung, von mehreren Spuren eines Projekts und von einem vollständigen Projekt enthält.

## Revendications

1. Procédé mis en ouvre par ordinateur pour générer un enregistrement de métadonnées représentant un contenu multimédia à partir d'au moins une séquence d'au moins un projet provenant d'au moins un outil créatif (50), l'outil créatif étant un outil de montage audio et/ou vidéo mis en oeuvre par ordinateur définissant un projet par un contenu multimédia d'une séquence de projet stocké dans une pluralité d'éléments multimédia et des métadonnées relatives à la séquence de projet,
le procédé comprenant les étapes, mises en oeuvre par un premier système informatique (30), consistant à
extraire un contenu multimédia d'éléments multimédia de la séquence de projet,
traiter le contenu multimédia extrait d'un élément multimédia pour générer une représentation du contenu multimédia extrait de l'élément multimédia,
extraire des métadonnées de l'élément multimédia, et
produire une sortie comportant les métadonnées extraites et la représentation du contenu multimédia extrait, et
le procédé comprenant en outre les étapes, mises en oeuvre par le premier système informatique ou un deuxième système informatique (10), consistant à
procéder à une reconnaissance de formes à l'aide de la représentation du contenu multimédia extrait pour un dit élément multimédia et d'une base de données de référence (20) contenant des éléments de données de référence (210) comportant des représentations de contenu de référence (216), une dite représentation de contenu de référence comportant une empreinte d'un contenu de référence et des métadonnées de référence associées (212), dans le but de faire correspondre la représentation du contenu multimédia extrait pour ledit élément multimédia avec une représentation de contenu de référence pour un élément de données de référence afin de déterminer des métadonnées de référence permettant d'identifier le contenu multimédia extrait pour ledit élément multimédia, et
générer un fichier pour un enregistrement de métadonnées, lequel enregistrement de métadonnées forme une feuille de montage, la feuille de montage comprenant les métadonnées extraites pour ledit élément multimédia en cas de non-correspondance dans la base de données pour la représentation du contenu multimédia extrait pour ledit élément multimédia et comprenant les métadonnées de référence déterminées en cas de correspondance dans la base de données pour la représentation du contenu multimédia extrait pour ledit élément multimédia.

2. Procédé selon la revendication 1, comprenant les étapes consistant à :
procéder, par le premier système informatique, à ladite reconnaissance de formes, et
générer, par le premier système informatique, le fichier d'enregistrement de métadonnées.

3. Procédé selon la revendication 2, comprenant l'étape consistant à transmettre le fichier à un système informatique d'organisme pour des détenteurs de droits.

4. Procédé selon la revendication 3, comprenant l'étape consistant à chiffrer le fichier avant de le transmettre.

5. Procédé selon la revendication 1, comprenant les étapes consistant à :
transmettre, par le premier système informatique, la sortie au deuxième système informatique, et
procéder, par le deuxième système informatique, à ladite reconnaissance de formes ; et
générer, par le deuxième système informatique, ladite feuille de montage.

6. Procédé selon la revendication 5, comprenant l'étape consistant à chiffrer, par le premier système informatique, la sortie avant de la transmettre au deuxième système informatique.

7. Procédé selon l'une quelconque des revendications précédentes, dans lequel
la représentation du contenu multimédia extrait comprend une transformée de Fourier du contenu multimédia extrait et l'étape consistant à traiter le contenu multimédia extrait comprend l'étape consistant à générer une transformée de Fourier du contenu multimédia extrait,
les représentations de contenu de référence comprennent des transformées de Fourier de travaux de référence respectifs associés chacun à des métadonnées identifiant les travaux de référence.

8. Procédé selon l'une quelconque des revendications précédentes, dans lequel le contenu multimédia comprend au moins un des éléments suivants : de l'audio, du texte, des images et de la vidéo.

9. Procédé selon l'une quelconque des revendications précédentes, dans lequel la représentation du contenu multimédia extrait comporte une représentation d'un ou de plusieurs éléments parmi : des visages, des images, des voix, des ambiances, des opportunités de placement de produits, une pluralité de pistes d'un projet, un projet complet.

10. Procédé selon l'une quelconque des revendications précédentes, comprenant en outre l'étape consistant à mettre à jour la base de données en cas de non-correspondance entre la représentation du contenu multimédia extrait pour ledit élément multimédia et la représentation de contenu de référence pour un élément de données de référence dans la base de données.

11. Produit-programme d'ordinateur, comprenant un code de programme apte à mettre en oeuvre les étapes du procédé selon l'une quelconque des revendications précédentes.

12. Système, comprenant au moins un premier système informatique (30) comprenant un processeur et une unité de stockage, le premier système informatique mettant en oeuvre un outil créatif (50), l'outil créatif étant un outil de montage audio et/ou vidéo mis en oeuvre par ordinateur et apte à définir un projet à l'aide d'un contenu multimédia d'une séquence de projet stocké dans une pluralité d'éléments multimédia et de métadonnées relatives à la séquence de projet, le premier système informatique comportant en outre au moins un module d'extraction de données conçu pour
extraire un contenu multimédia d'éléments multimédia de la séquence de projet,
traiter le contenu multimédia extrait d'un élément multimédia pour générer une représentation du contenu multimédia extrait de l'élément multimédia,
extraire des métadonnées de l'élément multimédia, et
produire une sortie comportant les métadonnées extraites et la représentation du contenu multimédia extrait,
le module d'extraction de données du premier système informatique, ou un deuxième système informatique (10), étant conçu pour
procéder à une reconnaissance de formes à l'aide de la représentation du contenu multimédia extrait pour un dit élément multimédia et d'une base de données de référence (20) contenant des éléments de données de référence (210) comportant des représentations de contenu de référence (216), une dite représentation de contenu de référence comportant une empreinte d'un contenu de référence et des métadonnées de référence associées (212), dans le but de faire correspondre la représentation du contenu multimédia extrait pour ledit élément multimédia avec une représentation de contenu de référence pour un élément de données de référence afin de déterminer des métadonnées de référence permettant d'identifier le contenu multimédia extrait pour ledit élément multimédia, et
générer un fichier pour un enregistrement de métadonnées, lequel enregistrement de métadonnées forme une feuille de montage, la feuille de montage comprenant les métadonnées extraites pour ledit élément multimédia en cas de non-correspondance dans la base de données pour la représentation du contenu multimédia extrait pour ledit élément multimédia et comprenant les métadonnées de référence déterminées en cas de correspondance dans la base de données pour la représentation du contenu multimédia extrait pour ledit élément multimédia.

13. Système selon la revendication 12, comprenant un dit deuxième système informatique, dans lequel
le module d'extraction de données du premier système informatique est conçu pour transmettre la sortie au deuxième système informatique, et
le deuxième système informatique est conçu pour procéder à ladite reconnaissance de formes et pour générer le fichier d'enregistrement de métadonnées.

14. Système selon la revendication 12 ou la revendication 13, dans lequel le contenu multimédia stocké comprend au moins un des éléments suivants : de l'audio, du texte, des images et de la vidéo.

15. Système selon l'une quelconque des revendications 12 à 14, dans lequel la représentation du contenu multimédia extrait comporte une représentation d'un ou de plusieurs éléments parmi : des visages, des images, des voix, des ambiances, des opportunités de placement de produits, une pluralité de pistes d'un projet, un projet complet.
